Europäisches Patentamt

European Patent Office

Office européen des brevets

(11) Veröffentlichungsnummer: **0 214 682**

A1

# (12) EUROPÄISCHE PATENTANMELDUNG

(21) Anmeldenummer: 86201412.3

(22) Anmeldetag: 12.08.86

(30) Priorität: 19.08.85 NL 8502289

(43) Veröffentlichungstag der Anmeldung:
18.03.87 Patentblatt 87/12

(84) Benannte Vertragsstaaten:
DE FR GB NL

(51) Int. Cl.⁴ **A01D 34/86** , F16H 1/00

(71) Anmelder: **Vogelenzang, Alexander Jan**
**Wageningsestraat 45**
**NL-6671 DB Zetten(NL)**

(72) Erfinder: **Vogelenzang, Alexander Jan**
**Wageningsestraat 45**
**NL-6671 DB Zetten(NL)**

(54) Scharnierendes Kraftübertragungsorgan für ein Mähwerk.

㊗ Scharnierendes Kraftübertragungsorgan zur Übertragung von Antriebskraft von der Schlepperzapfwelle auf eine am Tragarm befestigte, in viele Positionen bewegbare, am Schlepper gekuppelte, quer zur Fahrtrichtung angeordnete Mähvorrichtung - (9), wobei die mechanischen Kraftübertragungsorgane (6, 11) in den Tragarm (4, 8) integriert sind und aus zwei mittels einer Verbindungswelle (34) gekuppelten Kegelradübersetzungen bestehen, die in einem Gehäuse gelagert sind, zusammengestellt aus zwei zueinander in einer Ebene verdrehbaren Gehäuseteile (30, 31), wovon ein jeder fest an separaten Tragarmen (4, 8) befestigt ist, wobei die ausgehenden Wellen (22, 23) der Übertragungsorgane (12, 6, 11) mittels Zwischenwellen (20,24) gekuppelt sind.

Fig. 3

EP 0 214 682 A1

## Scharnierendes Kraftübertragungsorgan für ein Mähwerk.

Scharnierendes Kraftübertragungsorgan zur Übertragung von Antriebskraft von der Schlepperzapfwelle auf eine am Tragarm befestigte, in viele Positionen bewegbare, am Schlepper gekuppelte, quer zur Fahrtrichtung angeordnete Mähvorrichtung, wobei die mechanischen Kraftübertragungsorgane in den Tragarm integriert sind und aus zwei mittels einer Verbindungswelle gekuppelten Kegelradübersetzungen bestehen, die in einem Gehäuse gelagert sind, zusammengestellt aus zwei zueinander in einer Ebene verdrehbaren Gehäuseteile, wovon ein jeder fest an separaten Tragarmen befestigt ist, wobei die ausgehenden Wellen der Übertragungsorgane mittels Zwischenwellen gekuppelt sind.

Eine derartige Vorrichtung ist bekannt aus der Niederländischen Patentanmeldung No. 8400106.

Ein Nachteil dieser Konstruktion ist aber, dass beide Gehäusehälften mittels eines zentralen, einstellbaren Ziehbolzen gegeneinander gepresst werden, weshalb die Verbindungsachse als eine lange Hohlwelle ausgeführt werden muss, wobei auch noch eine zusätzliche Vorsorge für das Abfangen der Bolzenziehkraft ein Schrägkugellager vorgesehen werden muss. Zusätzlich ist mit der Notwendigkeit des Anbringens von Ölabdichtungen an beiden Enden des Ziehbolzens eine zusätzliche Störungsquelle vorhanden. Es ist klar, dass das ganze eine empfindliche und kostspielige Konstruktion ist, und dass wegen der Kraftausübung der Ziehbolzen beide Gehäuseteile mit einer grossen Reibung unter sich verdrehbar sind.

Die Erfindung sieht vor, die genannten Schwierigkeiten zu beseitigen, mittels einer Konstruktion, dass die Verbindungswelle in einer Nabe gelagert ist, die fest an einem Gehäuseteil befestigt ist, und am Aussenumkreis mit einer als Kugellaufbahn ausgeführten Rille versehen ist, welche als Innenring eines Vierpunktlagers dient, rundherum mit etwas Spielraum ein am anderen Gehäuseteil befestigter Ring angeordnet ist, mit einer an der Innenseite angebrachten, als Kugellaufbahn ausgeführten Rille, die als Aussenring dieses Lagers dient, in einer solchen Weise, dass nach dem Anbringen der Kugeln in die einandergegenüber angeordneten Rillen der Innen-und Aussenringe, die Gehäuseteile über 360° gegeneinander verdrehbar sind und als ein abgedichtetes Gehäuse betrachtet werden können, wobei die auf den einzelnen Gehäuseteilen ausgeübten Kräfte mittels dem Kugelkreis aufeinander übertragen werden.

Auf diese Weise erhält man eine Konstruktion, mit der beide Gehäuseteile leicht drehbar, konzentrisch und parallel fest miteinander verbunden sind, die nebenbei auch eine grosse Genauigkeit hinsichtlich der Zusammenarbeit der schnellaufenden Kegelräder garantiert.

Eine Wahlausführung dieser Konstruktion gemäss der Erfindung ist in den Zeichnungen angegeben.

Als weiterer Stand der Technik sind auch gegenüber einander scharnierender rechtwinkliger Zahnradübertragungen bekannt, wobei die sogenannte Verbindungsachse aus zwei Teilen besteht, die jede für sich mittels zwei Lagern in einem Gehäuse gelagert sind und mittels einer Kupplung oder Zwischenwelle miteinander verbunden sind, wobei beide Gehäuseteile sich über eine bestimmte Länge konzentrisch überlappen und auf einem bestimmten Abstand mittels zwei Lagern gelagert sind.

Die Zwischenabstände der rechtwinkligen Zahnradübersetzungen sind dabei aber notwendigerweise so gross, dass diese Konstruktion nicht verwendbar wäre als scharnierende Übertragungsorgane zwischen zwei Tragarmen, die soviel wie möglich in einer geraden Linie sein sollen.

Aus der U.S. Patentschrift Nr. 2.421.044 ist weiterhin eine Konstruktion bekannt, wobei zwei konische Zahnradübersetzungen mittels eines Verbindungszapfen aneinander gekuppelt sind. Dabei ist aber die Rede von zwei separaten Gehäusen, wovon das Ganze nicht zwischen den Tragarmen integriert ist und deshalb auch keine tragende Funktion ausüben kann, aber im Gegenteil mittels zwei Achszapfen pendelnd in einem Rahmen aufgehängt sind. Die Verbindungswelle ist nicht in einer eigenen Nabe gelagert, die in Kombination mit einem Vierpunktlager und dem Aussenring dafür sorgt, dass die Gehäuseteile leicht drehbar, konzentrisch und parallel verbunden sind.

Die Erfindung wird mittels der nachfolgenden Zeichnungen näher erläutert.

Abb. 1 ist eine Hinteransicht eines an einen Schlepper gekuppelten Mähwerks, gemäss der Erfindung.

Abb. 2 ist eine schematische Draufsicht der Tragarme mit Übertragungsorganen und Zwischenwellen wie in Abb. 1 ausgelegt.

Abb. 3 ist ein Schnitt durch ein scharnierendes Übertragungsorgan gemäss der Erfindung.

Abb. 4 ist ein vergrösserter Schnitt der Kugellaufbahnkonstruktion.

Abb. 5 ist eine Ansicht eines Flansches in Pfeilrichtung I der Abb. 3.

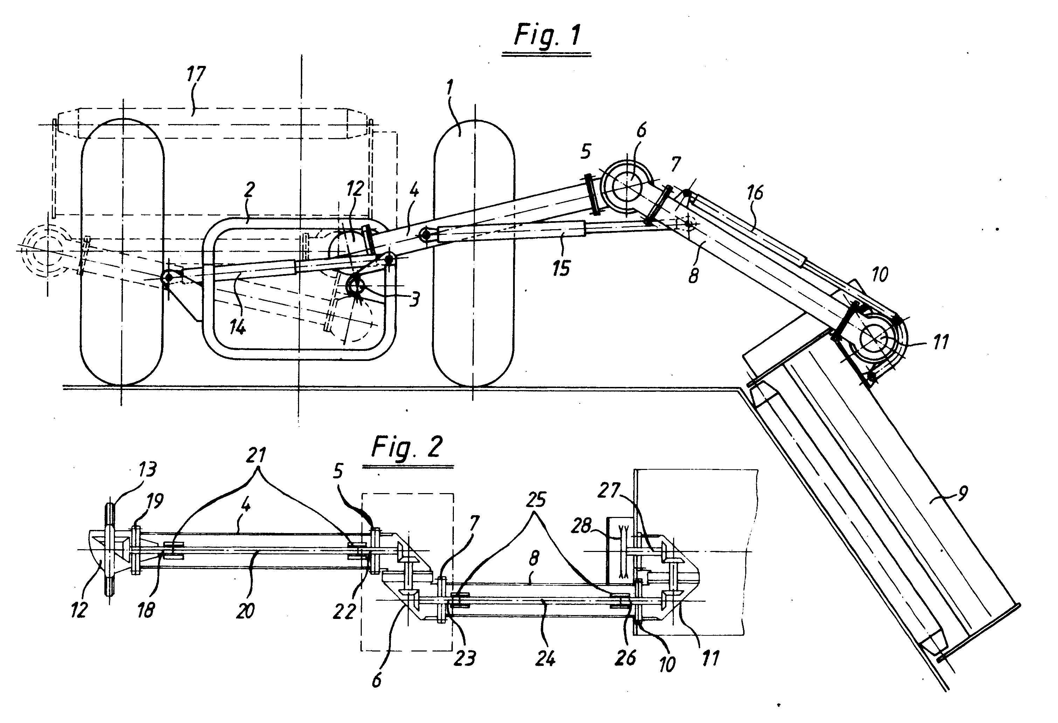

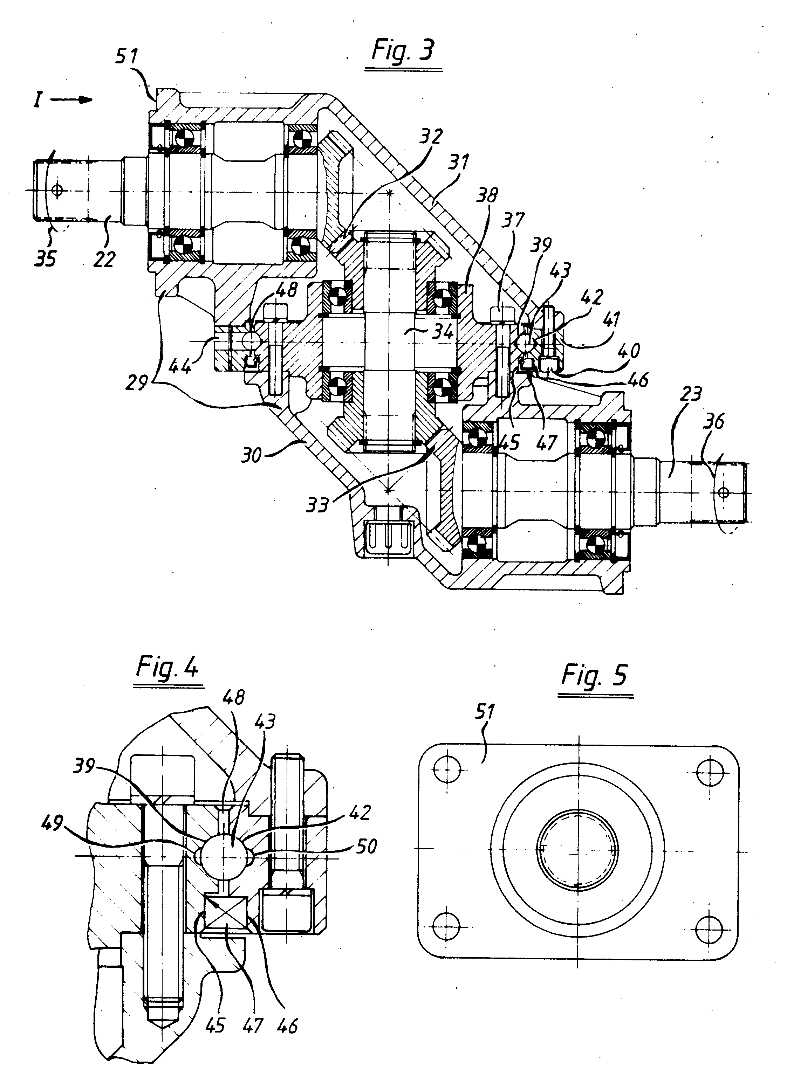

In Abb. 1 sind 1 die Konturen der Reifen, eines nicht weiter gezeichneten Schleppers. Der an des Dreipunktvorrichtung der Schlepper gekuppelte Rahmen 2 ist mittels der Scharnierachse 3 der erste Tragarm 4 welches drehbar befestigt ist. Der erste Tragarm 4 ist mittels einer Flanschverbindung mit Bolzen 5 am Kraftübertragungsorgan 6 verbunden, das mit einer gleichen Flanschverbindung 7 am zweiten Tragarm 8 befestigt ist, womit das Mähwerk 9 wieder mit Flanschverbindungen 10 mittels eines scharnierenden Kraftübertragungsorgans 11 verbunden ist. Am ersten Tragarm 4 ist eine rechtwinkelige Übertragung 12 montiert, deren eingehende Welle 13 (Abb. 2) mittels einer nicht gezeichneten Gelenkwelle an die ebenfalls nicht gezeichnete Schlepperzapfwelle gekuppelt ist. Die Stellung des ersten Tragarmes 4 in der Betrachtung zum Rahmen 2 wird von einem einfachwirkenden Hydraulikzylinder 14 eingestellt. Der Winkel zwischen dem ersten Tragarm 4 und dem zweiten Tragarm 8 wird vom Zylinder 15 bestimmt, und die Position des Mähwerkes 9 in Bezug zum zweiten Tragarm 8 vom Zylinder 16.

Die gestrichelt gezeichnete Position 17 ist die zusammengefaltete Transportposition des Mähwerkes. In der schematischen Draufsicht von Abb. 2 ist 13 die eingehende Welle, die von einer nicht gezeichneten Gelenkwelle von der ebenfalls nicht gezeichneten Schlepperzapfwelle angetrieben wird. Die ausgehende Welle 18 des rechtwinkeligen Übersetzungsgehäuses 12 das mittels einer Flanschverbindung 19 am ersten Tragarm 4 befestigt ist, ist innerhalb des ersten Tragarmes 4 und mittels einer Zwischenwelle 20 und flexiblen Kupplungen 21 an der eingehenden Welle 22 des scharnierbaren Übertragungsorganes 6 gekuppelt.

Die ausgehende Welle 23 ist auch wieder innerhalb des zweiten Tragarmes 8 mittels einer Zwischenwelle 24 mit flexiblen Kupplungen 25 an der eingehenden Welle 26 des scharnierbaren Übertragungsorganes 11 gekuppelt. Am freien Ende der ausgehenden Welle 27 des scharnierbaren Übertragungsorganes 11 ist eine Keilriemenscheibe 28 befestigt, von welcher die Welle des Mähwerkes 9 mittels eines nicht gezeichneten Keilriemens angetrieben wird.

Abbildung 3 ist ein Schnitt des Übertragungsorganes 6, wie in Abbildung 2 umrissen, mit der eingehenden Welle 22 und ausgehenden Welle 23. Im Gehäuse 29, bestehend aus zwei Teilen, 30 und 31, sind zwei Kegelradübersetzungen 32 und 33 angeordnet, welche mittels einer Verbindungswelle 34 gekuppelt sind.

Die Drehrichtung der eingehenden Welle 22 und der ausgehenden Welle 23 ist mittels den Pfeilen 35 und 36 angegeben. An dem Gehäuseteil 30 ist mittels des Bolzens 37 eine Nabe 38 befestigt, worin die Verbindungswelle 34 gelagert ist. Am Umfang der Nabe 38 ist eine als Kugellaufbahn ausgeführte Rille 39 angebracht. Am Gehäuseteil 31 ist mittels Bolzen 40 ein Ring 41 befestigt, worin an der Innenseite eine als Kugellaufbahn ausgeführte Rille 42 angebracht ist.

Durch das Einandergegenüberstellen der Kugellaufbahnen 39 und 42 und das Einfüllen der Kugeln 43 durch die Füllöffnung 44 sind die Nabe 38 und der Ring 41 so starr miteinander gekuppelt, dass nur eine Verdrehung gegeneinander möglich ist. In der Nabe 38 ist bei 45 eine Aussparung angebracht, worin in der Zusammenarbeit mit der Aussparung 46 im Ring 41 ein Ölabdichtungsring 47 montiert werden kann. Die Spalte 48 steht in offener Verbindung mit dem Innenraum des Gehäuses 29 so dass das darin vorhandene Öl auch für die Schmierung der Kugeln 43 und der Laufbahnen 39 und 42 dienen kann.

In der, in Abbildung 4 angegebenen Schnittzeichnung, der Kugellaufbahnkonstruktion 39 und 42, ist gezeichnet, wie diese zusammen mit den Kugeln 43 als sogenanntes Vierpunktlager betrachtet werden. Die in den Kugellaufbahnen angebrachten Rillen 49 und 50 dienen zur Durchströmung des Schmieröles. Abbildung 5 ist eine Ansicht des Flansches 51 von Abbildung 3, der mittels Bolzen an einen ähnlichen Flansch vom Tragarm 4 die Flanschverbindung 5 bildet.

Es ist klar, dass mit der Anwendung oben beschriebener Transmissionsteile eine mechanische, freitragende Kraftübertragung realisiert ist, die nahezu unempfindlich ist gegen im Rahmenteil auftretende Biegespannungen.

## Ansprüche

1. Scharnierendes Kraftübertragungsorgan zur Übertragung von Antriebskraft von der Schlepperzapfwelle auf eine am Tragarm befestigte, in viele Positionen bewegbare, am Schlepper gekuppelte, quer zur Fahrtrichtung angeordnete Mähvorrichtung (9), wobei die mechanischen Kraftübertragungsorgane (6, 11) in den Tragarm (4, 8) integriert sind und aus zwei mittels einer Verbindungswelle (34) gekuppelten Kegelradübersetzungen bestehen, die in einem Gehäuse gelagert sind, zusammengestellt aus zwei zueinander in einer Ebene verdrehbaren Gehäuseteile (30, 31), wovon ein jeder fest an separaten Tragarmen (4, 8) befestigt ist, wobei die ausgehenden Wellen (22, 23) der Übertragungsorgane (12, 6, 11) mittels Zwischenwellen (20, 24) gekuppelt sind, dadurch gekennzeichnet, dass die Verbindungswelle (34) in einer Nabe (38) gelagert ist, die fest an einem Gehäuseteil (30) befestigt ist, und am Aussenumkreis mit einer als Kugellaufbahn ausgeführten Rille (42) versehen ist, welche als Innenring eines Vierpunktlagers dient, rundherum mit etwas Spielraum ein am anderen Gehäuseteil (31) befestigter Ring - (41) angeordnet ist, mit einer an der Innenseite angebrachten, als Kugellaufbahn ausgeführten Rille (42), die als Aussenring dieses Lagers dient, in einer solchen Weise, dass nach dem Anbringen der Kugeln (43) in die einandergegenüber angeordneten Rillen der Innen-und Aussenringe, die Gehäuseteile (30, 31) über 360° gegeneinander verdrehbar sind und als ein abgedichtetes Gehäuse (29) betrachtet werden können, wobei die auf den einzelnen Gehäuseteile (30, 31) ausgeübten Kräfte mittels dem Kugelkreis aufeinander übertragen werden.

2. Vorrichtung gemäss Patentanspruch 1, dadurch gekennzeichnet, dass in das als Aussenring dienende Teil eine abschliessbare Offnung - (44) angebracht ist, wodurch, nachdem beide Gehäuseteile in Betrachtung zueinander in die richtige Lage gestellt sind, so viele Kugeln in die einandergegenüber gestellten Rillen (39, 42) eingefüllt werden können, dass diese nahezu ganz gefüllt sind.

3. Vorrichtung gemäss Patentanspruch 1, dadurch gekennzeichnet, dass die Nabe (38) in einer radialen Ebene über die Mitte der Kugellaufbahn in zwei Teile geteilt ist.

4. Vorrichtung gemäss Patentanspruch 1, dadurch gekennzeichnet, dass das als Aussenring - (41) dienende Gehäuseteil in einer radialen Ebene über der Mitte der Kugellaufbahn geteilt ist.

5. Vorrichtung gemäss Patentansprüche 1 bis 4, dadurch gekennzeichnet, dass das Profil der Rillen 39, 42), die als Kugellaufbahnen in die als Innen-und Aussenring dienenden Teile derart angebracht sind, dass nach dem die Kugeln (43) eingefüllt sind, das ganze als Vierpunktlager betrachtet werden kann, weil jede Rille aus zwei aufeinander anschliessende Rundungen besteht, deren Radius grösser ist als die Radien der Kugeln.

6. Vorrichtung gemäss Patentansprüche 1 bis 5, dadurch gekennzeichnet, dass beim Aussenring (42) auf den grössten Diameter und beim Innenring (39) auf den kleinsten Diameter eine Aussparung - (49, 50) angebracht ist, zum Durchfluss von Schmieröl.

7. Vorrichtung gemäss Patentansprüche 1 bis 6, dadurch gekennzeichnet, dass die als Kugellaufbahn ausgeführten Aussparungen (39, 42) in der Nabe (38) und im Ring (41) mittels der kreisförmigen Spalte (48) an einer Seite in offener Verbindung steht mit dem Raum innerhalb des Gehäuses, sodass das darin vorhandene Öl durch diese Spalte (48) zwischen die Kugeln und Laufbahnen fliesst.

8. Vorrichtung gemäss Patentansprüche 1 bis 7, dadurch gekennzeichnet, dass an der anderen Seite der in Patentanspruch 7 angegeben Spalte im Innen-und Aussenring Rillen 45, 46) angebracht sind, in einer solchen Weise, dass darin ein Ölabdichtungsring (47) montiert werden kann.

9. Vorrichtung gemäss Patentansprüche 1 bis 8, dadurch gekennzeichnet, dass die Übersetzungsverhältnisse der Kegelradübersetzungen so gewählt sind, dass bei umgekehrter Montage der scharnierbaren Übertragung dieselbe Drehzahl der ausgehenden Welle erlangt werden kann, bei zwei verschiedenen Drehzahlen der eingehenden Welle.

10. Vorrichtung wie zuvor beschrieben und in den Zeichnungen wiedergeben ist.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | NL-A-8 400 106 (VOGELENZANG) <br> * Insgesamt * <br><br> --- | 1,5 | A 01 D 34/86 <br> F 16 H 1/00 |
| A | FR-A-1 488 605 (LAVERDA) <br> * Seite 2, linke Spalte, Zeilen 30-36 * <br><br> --- | 1 | |
| A | FR-A-2 253 593 (HURE) <br> * Seite 6, Zeilen 10,11; Figuren 3,4,6 * <br><br> ----- | 5-7 | |

| RECHERCHIERTE SACHGEBIETE (Int. Cl.4) |
|---|
| A 01 D <br> F 16 H |

Der vorliegende Recherchenbericht wurde für alle Patentansprüche erstellt.

| Recherchenort | Abschlußdatum der Recherche | Prüfer |
|---|---|---|
| DEN HAAG | 02-12-1986 | DE LAMEILLIEURE D. |